# EUROPÄISCHE PATENTANMELDUNG

(11) **EP 4 464 442 A2**
(43) Veröffentlichungstag der Anmeldung: **20.11.2024**
(21) Anmeldenummer: 24205030.0
(22) Anmeldetag: 13.08.2013
(51) Int. Cl.: B23B 31/11

(54) **WERKZEUGANORDNUNG**

(30) Priorität: 17.08.2012 DE 102012107546
(62) Teilanmeldung aus: 16151425.2
(71) Anmelder: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(57) **Zusammenfassung**

Die Erfindung betrifft eine Werkzeuganordnung mit einem Einschraubwerkzeug (1) und einer Werkzeugaufnahme (7), wobei das Einschraubwerkzeug (1) ein Gewinde (4) zum Eingriff in ein Gegengewinde (11) an der Werkzeugaufnahme (7) aufweist. Erfindungsgemäß weisen das Gegengewinde (11) und das Gewinde (4) unterschiedliche Gewindekonturen auf, so dass sich diese im verschraubten Zustand durch elastische Verformung aneinander anpassen.

## Beschreibung

Die Erfindung betrifft eine Werkzeuganordnung nach dem Oberbegriff des Anspruchs 1.

Aus der US 2,328,602 ist eine gattungsgemäße Werkzeuganordnung bekannt, welche aus einem Einschraubwerkzeug und einer als Maschinenspindel ausgebildeten Werkzeugaufnahme besteht. An dem Einschraubwerkzeug ist ein als Sägezahngewinde ausgebildetes Außengewinde angeordnet, welches in ein entsprechendes Innengewinde an der Werkzeugaufnahme eingreift. An der Stirnseite der Werkzeugaufnahme ist zudem eine konische Stützfläche zur zentrischen Anlage einer korrespondierenden Gegenfläche an dem Einschraubwerkzeug vorgesehen.

Bei der Verbindung von Einschraubwerkzeugen mit einer Werkzeugaufnahme über ein Gewinde kann sich das Problem ergeben, dass aufgrund einer elastischen Verformung der Gewindeflanken beim Verschrauben und Verspannen nur wenige Gewindegänge in der Nähe von angeordneten Spannflächen eine tragende Funktion übernehmen. Hierdurch kann die mögliche Zugfestigkeit des Gewindes nicht ausgenutzt werden und die Verbindung erreicht nicht die maximale Stabilität. Dies ist insbesondere dann der Fall, wenn Außen- und/oder Innengewinde aus sprödem Material bestehen, wie z.B. Hartmetall oder Keramik.

Aufgabe der Erfindung ist es, eine Werkzeuganordnung mit einer Werkzeugaufnahme und einem Einschraubwerkzeug zu schaffen, die eine stabile und positionsgenaue Anordnung des Einschraubwerkzeugs in der Werkzeugaufnahme ermöglicht.

Diese Aufgabe wird durch eine Werkzeuganordnung mit den Merkmalen des Anspruchs 1, ein Einschraubwerkzeug nach Anspruch 16 und eine Werkzeugaufnahme nach Anspruch 17 gelöst. Zweckmäßige Weiterbildungen und vorteilhafte Ausführungsformen der Erfindung sind Gegenstand der Unteransprüche.

Bei der erfindungsgemäßen Werkzeuganordnung weisen das Gewinde und das dazu korrespondierende Gegengewinde unterschiedliche Gewindekonturen auf, welche sich im verschraubten Zustand durch elastische Verformung aneinander anpassen. Dies hat den Vorteil, dass beim Verschrauben durch eine elastische Verformung der Gewinde eine Vorspannung über einen Teil des Gewindes erzeugt wird und beim Verspannen ein gleichmäßiges Tragbild des Gewindes über dessen gesamte Länge erreicht wird. Hierdurch wird die Zugfestigkeit des gesamten Gewindes nutzbar. Unter Gewindekontur ist nicht die Kontur einer Gewindeflanke, sondern die Kontur des gesamten Gewindes im Längsschnitt zu verstehen.

In einer ersten vorteilhaften Ausführungsform weisen das Gewinde und das Gegengewinde eine unterschiedliche Steigung auf. Die Gewindeverbindung kann dabei so gewählt werden, dass die als Außengewinde ausgebildete Gewindekomponente eine kleinere Steigung als das dazu korrespondierende Innengewinde aufweist. Dies ermöglicht, dass die Gewindeflanken durch die Verschraubung derartig elastisch gedehnt bzw. gestaucht werden, dass sich die Gewindekonturen aneinander anpassen. Damit liegen die gesamten Gewindegänge aneinander an und es lässt sich ein gleichmäßiges Tragbild erzielen.

In einer zweiten vorteilhaften Ausführungsform können Gewinde und Gegengewinde als konisches Innengewinde und Außengewinde mit unterschiedlichen Kegelwinkeln ausgebildet sein. Hierdurch kann ebenfalls eine Dehnung bzw. Stauchung bestimmter Gewindebereiche und damit ein gleichmäßiges Tragbild der Gewindeverbindung erreicht werden. In einer besonders bevorzugten Ausführungsform ist der Kegelwinkel des Innengewindes größer als der Kegelwinkel des Außengewindes. Durch diese spezielle Ausgestaltung hat der Gewindegang des Außengewindes einen größeren Durchmesser als der entsprechende Gang des Innengewindes. Durch die bevorzugt geneigten Gewindeflanken kommt damit dieser Teil des Außengewindes zuerst in Kontakt mit dem Innengewinde und wird somit auch zuerst gespannt. Bei einem Verspannen der Gewinde verformt sich dieser Bereich elastisch und die Gewindekonturen passen sich aneinander an. Auf diese Weise kann ein gleichmäßiges Tragbild erreicht werden.

Das Außengewinde und das entsprechende Innengewinde weisen zweckmäßigerweise eine zum freien Ende des Gewindezapfens hin bzw. zum inneren Ende des Innengewindes hin abnehmende Gewindetiefe auf. Die Gewinde können aber auch eine konstante Gewindetiefe aufweisen.

In einer weiteren vorteilhaften Ausgestaltung enthält die Werkzeugaufnahme eine Einsatzbuchse, in der das Innengewinde vorgesehen ist. Durch die Wahl eines geeigneten Materials für die Einsatzbuchse kann eine Schwingungsdämpfung erreicht werden. Ferner kann damit auch die Werkzeugaufnahme aus festem, aber sprödem Hartmetall und die Einsatzbuchse mit dem Gewinde aus weicherem, dafür aber eher elastischem Stahl hergestellt werden, was für eine sichere Arretierung der Schraubverbindung günstig ist. Zudem kann die Werkzeugaufnahme durch verschiedene Einsatzbuchsen für die Aufnahme von unterschiedlichen Geometrien von Einschraubwerkzeugen angepasst werden. Die Einsatzbuchse kann aus einem Teil oder aus mehreren Teilen bestehen, die auch aus unterschiedlichen Materialien bestehen können. Es versteht sich, dass das Innengewinde in Form einer Einsatzbuchse auch am Werkzeug angebracht sein kann.

In einer vorteilhaften Ausführungsform können an dem Einschraubwerkzeug und der Werkzeugaufnahme Spannflächen durch zwei konische Anlage- bzw. Auflageflächen mit unterschiedlichen Kegelwinkeln gebildet sein. Dadurch wird ein Abstützbereich mit einem Doppelkonus geschaffen, der gegenüber einer Plananlage oder einer geraden Anlagefläche eine vergrößerte Auflagefläche und eine verbesserte Zentrier- und Abstützwirkung ermöglicht. Es ist jedoch auch möglich plane Auflageflächen oder bei der Verwendung eines konischen Gewindes keine Auflagefläche vorzusehen.

Die an einen Werkzeugkopf an dem Werkzeug angrenzende erste konische Anlagefläche des Einschraubwerkzeugs und die dazugehörige konische erste Auflagefläche an der Stirnseite der Werkzeugaufnahme weisen vorzugsweise einen relativ großen Kegelwinkel auf. Hier hat sich ein Kegelwinkel von 170° als günstig herausgestellt. In einer bevorzugten Ausgestaltung schließt sich an diese Fläche am Einschraubwerkzeug die zweite konische Anlagefläche und an der Werkzeugaufnahme die dazugehörige zweite konische Auflagefläche an. Diese zweite Anlagefläche und die dazu korrespondierende zweite Auflagefläche weisen vorzugsweise relativ kleine Kegelwinkel auf. Hier hat sich ein Kegelwinkel von 10° als günstig herausgestellt. Es ist aber auch möglich zwischen den beiden konischen Flächen einen z.B. zylindrischen Zwischenbereich vorzusehen. Ein Doppelkonus der beschriebenen Art mit zwei unterschiedlichen Kegelwinkeln hat den Vorteil, dass der kleine Kegelwinkel eine gute Zentrierung des Einschraubwerkzeugs in der Werkzeugaufnahme und der große Kegelwinkel eine zusätzliche Zentrierung aber mit stark reduzierten Aufspreizkräften an der Werkzeugaufnahme ermöglicht. Zudem wird durch die konische erste Anlagefläche die Steifigkeit des Werkzeugs erhöht, da das Werkzeug bei radialer Belastung nicht abgleiten kann, wie das bei einer planen Anlagefläche der Fall ist.

Dabei sind für die Orientierung der konischen ersten Anlagefläche und der dazugehörigen konischen ersten Auflagefläche zwei Ausführungen möglich. In einer ersten, bevorzugten Ausgestaltung verringern sich die Durchmesser dieser konischen Flächen in Einschraubrichtung des Werkzeugs, dass heißt die Kegel, welche den beiden den Doppelkonus bildenden Kegelflächen zugrunde liegen, zeigen in dieselbe Richtung. In dieser Ausführungsform ist eine leichte Aufspreizung der Werkzeugaufnahme durch die konischen Flächen möglich. Im Vergleich zu einer planen axialen Anlagefläche steigt hierbei die Gewindevorspannung mit dem Einschraubwinkel weniger stark an und es ist somit eine exaktere Einstellung der Vorspannung bei der Montage des Einschraubwerkzeugs möglich. Da die Einschraubwerkzeuge zumeist einteilig aus sehr harten Werkstoffen hergestellt werden, beschränkt sich die für die Gewindearretierung notwendige elastische Verformung des Gewindes zu einem großen Teil auf die Verformung des Innengewindes der Werkzeugaufnahme. Im Hinblick auf eine möglichst lange Lebensdauer einer solchen Werkzeugaufnahme ist eine exakte Einstellung der Gewindevorspannung somit äußerst wichtig. Durch einen Doppelkonus der beschriebenen Art wird eine exakte, weil besser einstellbare Gewindevorspannung ermöglicht. In einer weiteren möglichen Ausgestaltung vergrößern sich die Durchmesser der konischen ersten Anlagefläche und der dazugehörigen konischen ersten Auflagefläche in Einschraubrichtung des Werkzeugs, dass heißt die Kegel, welche den beiden den Doppelkonus bildenden Kegelflächen zugrunde liegen, zeigen in entgegengesetzte Richtungen. Durch eine derartige Ausgestaltung des Doppelkonus wird einer Aufspreizung der Werkzeugaufnahme entgegen gewirkt, da die durch die konischen Flächen bedingten radialen Kräfte entgegen gesetzt wirken. Der besondere Vorteil dieser Ausgestaltung ist, dass durch die reduzierte Aufspreizung der Hülse mit dem Innengewinde ein höheres Anzugsmoment erzielt werden kann, ohne dabei die Gewindehülse zu beschädigen.

In einer weiteren vorteilhaften Weise ist am freien Ende des Gewindezapfens und entsprechend auch am inneren Ende des Innengewindes ein weiterer Abstützbereich mit einer weiteren Anlagefläche und einer dazu korrespondierenden weiteren Auflagefläche vorgesehen. Diese weitere Anlagefläche am Gewindezapfen kann z.B. kugelförmig ausgebildet sein, während die dazugehörige weitere Auflagefläche zylindrisch ausgeführt sein kann. Durch die kugelförmigen Anlagefläche und die zylindrische Auflagefläche wird in diesen Bereich eine nur partielle Berührung zwischen dem Einschraubwerkzeug und der Werkzeugaufnahme erreicht. Zweckmäßigerweise weist die kugelförmige Anlagefläche ein Übermaß gegenüber der zylindrischen Auflagefläche auf, so dass die Vorspannung in diesem weiteren Abstützbereich unabhängig von der Einschraubtiefe ist. Es sind aber auch andere Ausgestaltungen des weiteren Abstützbereichs denkbar. So können an dem Werkzeug und der Werkzeugaufnahme auch in beliebiger Kombination kugelförmige, konische oder zylindrische Anlageflächen bzw. Auflageflächen vorgesehen sein.

Das Gewinde kann als Außen- oder Innengewinde ausgebildet sein, wobei dann das Gegengewinde dementsprechend als korrespondierendes Innen- oder Außengewinde ausgebildet ist.

Die Werkzeugaufnahme kann beispielsweise aus Stahl, Hartmetall, Aluminium oder einem Faserverbundwerkstoff, insbesondere mit Glas- oder Kohlefaser, bestehen.

Weitere Besonderheiten und Vorzüge der Erfindung ergeben sich aus der folgenden Beschreibung bevorzugter Ausführungsbeispiele anhand der Zeichnungen.

Es zeigen:
- Figur 1: ein Einschraubwerkzeug in einem Längsschnitt;
- Figur 2: die Werkzeugaufnahme in einem Längsschnitt und
- Figur 3: die Werkzeuganordnung in einem Längsschnitt.

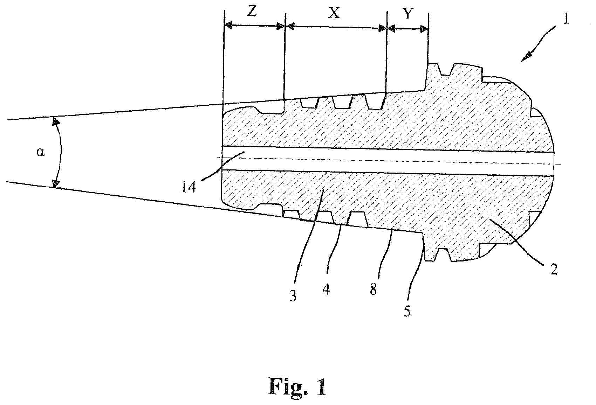

In der Figur 1 ist ein Einschraubwerkzeug 1 der Werkzeuganordnung in der Schnittansicht gezeigt. Das Einschraubwerkzeug 1 weist einen hier als Kugelkopffräser ausgebildeten Werkzeugkopf 2 und einen sich konisch nach hinten verjüngenden Werkzeugschaft 3 auf. Der Werkzeugschaft 3 ist bei dem hier gezeigten Ausführungsbeispiel in einen Gewindebereich X mit einem Außengewinde 4, einen zwischen dem Werkzeugkopf 2 und dem Außengewinde 4 angeordneten ersten äußeren Abstützbereich Y und einen zweiten inneren Abstützbereich Z am freien Ende des Werkzeugschafts 3 unterteilt. Der Werkzeugschaft 3 kann aber auch ohne zusätzlichen äußeren Abstützbereich Y und/oder ohne inneren Abstützbereich Z ausgeführt sein.

Das Außengewinde 4 im Gewindebereich X verjüngt sich konisch mit dem Kegelwinkel α. Der erste äußere Abstützbereich Y weist eine erste konische Anlagefläche 5 zur Anlage an einer gegenkonischen Auflagefläche 6 an einer vorderen Stirnseite einer Werkzeugaufnahme 7 und eine zweite konische Anlagefläche 8 zur Anlage an einer zweiten konischen Auflagefläche 9 im Inneren der Werkzeugaufnahme 7 auf. Dadurch ergibt sich an dem Übergang zwischen dem Werkzeugkopf 2 und dem Außengewinde 4 ein Doppelkonus, der für eine verbesserte Zentrierung und erhöhte Abstützwirkung sorgt.

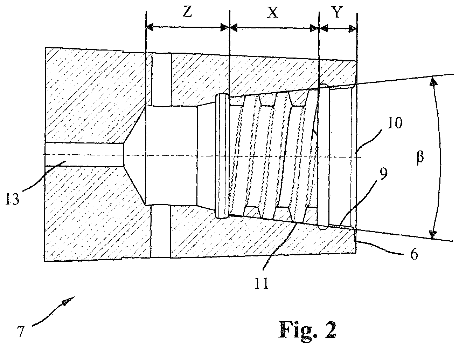

In der Figur 2 ist die zu dem Einschraubwerkzeug 1 gehörende Werkzeugaufnahme 7 gezeigt. Diese weist eine Aufnahmeöffnung 10 mit einem Innengewinde 11 auf. Das Innengewinde 11 ist konisch ausgebildet und korrespondiert zu dem Außengewinde 4 des Einschraubwerkzeugs 1, besitzt jedoch den gegenüber dem Kegelwinkel α größeren Kegelwinkel β. Die Steigung des Außengewindes 4 und des Innengewindes 11 kann gleich ausgebildet sein. An der vorderen Stirnseite der Werkzeugaufnahme 7 ist der äußerer Abstützbereich Y mit der ersten Auflagefläche 6 zur Anlage an der ersten Anlagefläche 5 und mit der zweiten konischen Auflagefläche 9 zur Anlage an der zweiten Anlagefläche 8 des Einschraubwerkzeugs 1 vorgesehen. Auch ist in der Werkzeugaufnahme 7 eine zu deren Mittelachse 12 koaxiale Zufuhröffnung 13 für die Zuführung eines Arbeitsfluids zur Durchgangsöffnung 14 des Einschraubwerkzeugs 1 angeordnet.

Wird das Einschraubwerkzeug 1 in die Aufnahmeöffnung 10 der Werkzeugaufnahme 7 eingesetzt, kommen zuerst die dem freien Ende des Werkzeugschafts nahen Gewindegänge des Außengewindes 4 in Eingriff mit dem Innengewinde 11. Beim Verschrauben wird auch zuerst dieser Teil der Gewindeverbindung gestaucht bzw. gedehnt, so dass in diesem Bereich die Gewindeflanken der Gewindeverbindung aneinander anliegen. Beim Verspannen der Gewindeverbindung kommen auch die übrigen Gewindegänge der Gewindeverbindung in Eingriff miteinander und es entsteht ein gleichmäßiges Tragbild. Belastungen, welche über den Werkzeugkopf auf diese Gewindeverbindung aufgebracht werden, werden gleichmäßig auf die verschiedenen Gewindeflanken aufgeteilt und in die Werkzeugaufnahme eingeleitet. Die Gewindeverbindung dieser Werkzeuganordnung ist damit äußerst stabil und effektiv. Für diese Gewindeverbindung eignen sich speziell Gewinde mit geneigten Flächen, also Spitzgewinde, Rundgewinde, Sägezahngewinde oder dergleichen.

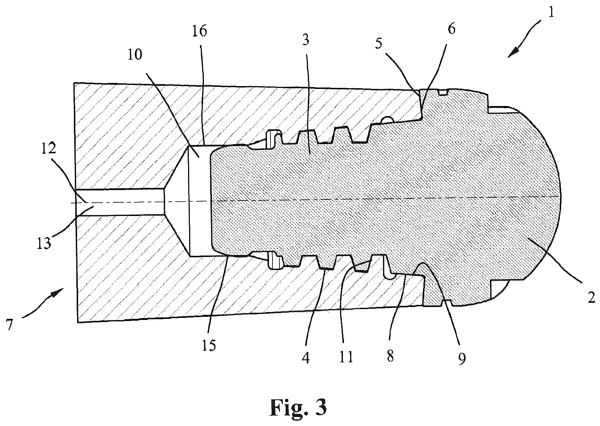

Die beschriebenen Vorteile können jedoch auch mit einer weiteren Ausführungsform erzielt werden, welche in Figur 3 gezeigt ist. Bei dieser weiteren Ausführungsform werden die unterschiedlichen Gewindekonturen des Außengewindes 4 und des Innengewindes 11 durch eine unterschiedliche Gewindesteigung erreicht. Bei einer solchen Gewindeverbindung kommt es beim Verschrauben zu einer Stauchung bzw. Dehnung der Gewindeflanken. Die Größe der Stauchung bzw. Dehnung kann über den Unterschied der Gewindesteigungen eingestellt werden. Damit ist es möglich, gezielt eine bestimmte Vorspannung innerhalb der Gewindeverbindung zu erzeugen, um ein gleichmäßiges Tragbild der Gewindeflanken zu erreichen. Das Außengewinde 4 in Figur 3 weist eine kleinere Gewindesteigung als das Innengewinde 11 auf. Dadurch wird erreicht, dass das Außengewinde 4 beim Verschrauben mit dem Innengewinde 11 gestreckt und das Innengewinde 11 gestaucht wird. Wird diese Gewindeverbindung verspannt, so liegen durch die Stauchung bzw. Dehnung beim Verschrauben alle Gewindegänge aneinander an und es ergibt sich ein gleichmäßiges Tragbild und eine sehr stabile Verbindung. Für das Außengewinde und das entsprechende Innengewinde können sowohl konische als auch zylindrische Gewindeformen verwendet werden, welche als Trapezgewinde, Flachgewinde, Spitzgewinde, Rundgewinde, Sägezahngewinde oder dgl. ausgebildet sind.

Bei der in Figur 3 dargestellten Ausführung der Werkzeuganordnung ist das Außengewinde 4 des Einschraubwerkzeugs 1 und das dazu gehörige Innengewinde 11 der Werkzeugaufnahme 7 als Trapezgewinde mit einem Flankenwinkel von 30° ausgeführt. Das Außengewinde 4 des Einschraubwerkzeugs 1 und das dazu gehörige Innengewinde 11 der Werkzeugaufnahme 7 können aber auch als Trapezgewinde mit anderen Flankenwinkeln ausgeführt sein. Im Gegensatz zu den herkömmlichen Gewinden, bei denen die Gewindegänge eine gleich bleibende Gewindetiefe aufweisen, weist das hier verwendete Außengewinde 4 eine vom Werkzeugkopf 2 zum freien hinteren Ende des Werkzeugschafts 3 hin abnehmende Gewindetiefe auf. Auch bei dem Innengewinde 11 der Werkzeugaufnahme 7 nimmt die Gewindetiefe von der zweiten Auflagefläche 9 bis zum zweiten Abstützbereich Z hin ab. Hierdurch wird den unterschiedlichen Belastungen über die Länge des Gewindes Rechnung getragen.

Aus Figur 3 ist ersichtlich, dass die erste Anlagefläche 5 des Einschraubwerkzeugs 1 und die entsprechende erste Auflagefläche 6 der Werkzeugaufnahme 7 um jeweils 5° bezüglich einer zu den Mittelachsen 12 senkrechten Ebene in Richtung des vorderen Endes des Werkzeugkopfs 2 geneigt sind. Dadurch weisen die erste konische Anlagefläche 5 und auch die erste konische Auflagefläche 6 einen Kegelwinkel von mindestens 140° und maximal 179°, aber bevorzugt 170° auf Der Durchmesser der zweiten konischen Anlagefläche 8 des Einschraubwerkzeugs 1 und der Durchmesser der zweiten konischen Auflagefläche 9 der Werkzeugaufnahme 7 verjüngen sich in Einschraubrichtung, so dass sich ein Kegelwinkel von mindestens 1° und weniger als 90°, aber bevorzugt 10° ergibt, was einen Winkel der Kegelflächen von 5° gegenüber der Mittelachse 12 bedeutet.

In den Figuren ist zudem der zweite Abstützbereich Z gezeigt. Dieser wird gebildet durch eine kugelförmige weitere Anlagefläche 15 des Einschraubwerkzeugs 1 und einer dazu korrespondierenden zylindrischen Auflagefläche 16 am Ende der Aufnahmeöffnung 10. Die kugelförmige Anlagefläche 15 sorgt für eine nur partielle Berührung zwischen dem Einschraubwerkzeug 1 und der Werkzeugaufnahme 7. Zweckmäßigerweise weist die kugelförmige Anlagefläche 15 ein Übermaß gegenüber der zylindrischen Auflagefläche 16 auf, so dass die Vorspannung in diesem zweiten Abstützbereich Z unabhängig von der Einschraubtiefe ist. Der zweite Abstützbereich erhöht die Stabilität und die Rundlaufgenauigkeit der Werkzeuganordnung durch den weiteren Lagerpunkt.

Bei dem in Figur 3 gezeigten Ausführungsbeispiel erweitern sich die Durchmesser der konischen ersten Anlagefläche 5 des Einschraubwerkzeugs 1 und der dazugehörigen konischen ersten Auflagefläche 6 der Werkzeugaufnahme 7 in Einschraubrichtung des Einschraubwerkzeugs 1. Die erste Anlagefläche 5 und die entsprechende erste Auflagefläche 6 sind um jeweils 5° bezüglich einer zu der Mittelachse 12 senkrechten Ebene in Richtung des Werkzeugschafts 3 geneigt. Dadurch weist die erste konische Anlagefläche 5 und auch die erste konische Auflagefläche 6 genau wie in dem Ausführungsbeispiel aus den Figuren 1 und 2 einen Kegelwinkel von 170° auf. Die zweite konische Anlagefläche 8 und die zweite konische Auflagefläche 9 verjüngen sich mit einem Winkel von 5° gegenüber der Mittelachse 12, so dass sich ein Kegelwinkel von 10° ergibt. Im Unterschied zu den Ausführungen der Figuren 1 und 2 zeigen die Kegel, welche den beiden den Doppelkonus bildenden Kegelflächen zugrunde liegen, in entgegen gesetzte Richtungen.

Die Erfindung ist nicht auf die vorstehend beschriebenen und in der Zeichnung dargestellten Ausführungsbeispiele beschränkt. So kann z.B. eine unterschiedliche Gewindekontur zwischen Außen- und Innengewinde auch auf eine andere Art als beschrieben erreicht werden. Zudem kann anstelle der Zentrierung des Einschraubwerkzeugs über die doppelkonischen Zentrierflächen auch eine plane Anlagefläche verwendet werden. Bei der Ausführungsform mit der konischen Gewindeverbindung kann auch ganz auf eine zusätzliche Anlagefläche verzichtet werden. So ist es aber auch möglich, Merkmale der beschriebenen Ausführungsbeispiele miteinander zu kombinieren. So kann es beispielsweise vorteilhaft sein, eine konische Gewindeverbindung mit unterschiedlichen Kegelwinkeln und unterschiedlichen Steigungen auszubilden, um eine besonders hohe Vorspannung bzw. Verspannung in der Gewindeverbindung zu erzielen.

## Patentansprüche

1. Werkzeuganordnung mit einem Einschraubwerkzeug (1) und einer Werkzeugaufnahme (7), wobei das Einschraubwerkzeug (1) ein Gewinde (4) zum Eingriff in ein Gegengewinde (11) an der Werkzeugaufnahme (7) aufweist, **dadurch gekennzeichnet, dass** das Gegengewinde (11) und das Gewinde (4) unterschiedliche Gewindekonturen aufweisen, die sich im verschraubten Zustand durch elastische Verformung aneinander anpassen.

2. Werkzeuganordnung nach Anspruch 1, **dadurch gekennzeichnet, dass** das Gewinde (4) und das Gegengewinde (11) eine unterschiedliche Steigung aufweisen.

3. Werkzeuganordnung nach Anspruch 1, **dadurch gekennzeichnet, dass** das Gewinde (4) und das Gegengewinde (11) als konische Innengewinde und Außengewinde mit unterschiedlichen Kegelwinkeln (α; β) ausgebildet sind.

4. Werkzeuganordnung nach Anspruch 3, **dadurch gekennzeichnet, dass** der Kegelwinkel (β) des Innengewindes (11) größer als der Kegelwinkel (α) des Außengewindes (4) ist.

5. Werkzeuganordnung nach einem der vorhergehenden Ansprüche, **dadurch gekennzeichnet, dass** das Gewinde (4) oder das Gegengewinde (11) an einem Gewindezapfen angeordnet ist und das Gewinde (4) und/oder das Gegengewinde (11) eine zum freien Ende des Gewindezapfens hin abnehmende Gewindetiefe enthält.

6. Werkzeuganordnung nach einem der Ansprüche 1 bis 5, **dadurch gekennzeichnet, dass** die Werkzeugaufnahme (7) oder das Einschraubwerkzeug (1) eine Einsatzbuchse (1) enthält, in der das Innengewinde (11) angeordnet ist.

7. Werkzeuganordnung nach einem der Ansprüche 1 bis 6, **dadurch gekennzeichnet, dass** an dem Einschraubwerkzeug (1) und der Werkzeugaufnahme (7) mindestens ein Abstützbereich (Y) angeordnet ist, welcher durch zwei konische Anlageflächen (5, 8) bzw. konische Auflageflächen (6, 9) mit unterschiedlichen Kegelwinkeln gebildet ist.

8. Werkzeuganordnung nach Anspruch 7, **dadurch gekennzeichnet, dass** die beiden konischen Anlageflächen (5, 8) bzw. konischen Auflageflächen (6, 9) unmittelbar aneinander angrenzen.

9. Werkzeuganordnung nach Anspruch 7 oder 8, **dadurch gekennzeichnet, dass** der Abstützbereich (Y) durch eine an den Werkzeugkopf (2) angrenzende erste konische Anlagefläche (5) bzw. konische Auflagefläche (6) und eine zweite konische Anlagefläche (8) bzw. konische Auflagefläche (9) gebildet wird.

10. Werkzeuganordnung nach Anspruch 9, **dadurch gekennzeichnet, dass** die erste konische Anlagefläche (5) bzw. Auflagefläche (6) einen Kegelwinkel von 170° und die zweite konische Anlagefläche (8) bzw. Auflagefläche (9) einen Kegelwinkel von 10° aufweist.

11. Werkzeuganordnung nach einem der Ansprüche 7 bis 10, **dadurch gekennzeichnet, dass** sich der Durchmesser der ersten konischen Anlagefläche (5) bzw. der Auflagefläche (6) in Einschraubrichtung des Einschraubwerkzeugs vergrößert oder bevorzugt verringert.

12. Werkzeuganordnung nach einem der vorhergehenden Ansprüche, **dadurch gekennzeichnet, dass** an dem Einschraubwerkzeug und der Werkzeugaufnahme ein weiterer Abstützbereich (Z) mit einer weiteren Auflagefläche (16) zur Anlage an einer weiteren Anlagefläche (15) vorgesehen ist.

13. Werkzeuganordnung nach Anspruch 12, **dadurch gekennzeichnet, dass** die weitere Anlagefläche (15) ein Übermaß gegenüber der weiteren Auflagefläche (16) aufweist und es somit bei der Montage von Einschraubwerkzeug (1) und Werkzeugaufnahme (7) zu einer Pressung zwischen der Anlagefläche (15) und der Auflagefläche (16) kommt.

14. Werkzeuganordnung nach Anspruch 12 oder 13, **dadurch gekennzeichnet, dass** die weitere Auflagefläche (16) und die weitere Anlagefläche (15) als zylindrische, kugelförmige oder konische Auflage- bzw. Anlageflächen ausgebildet sind.

15. Werkzeuganordnung nach einem der vorhergehenden Ansprüche, **dadurch gekennzeichnet, dass** das Gewinde (4) als Innen- oder Außengewinde und dementsprechend das Gegengewinde (11) als Außen- oder Innengewinde ausgebildet ist.

16. Einschraubwerkzeug für eine Werkzeuganordnung nach einem der Ansprüche 1 bis 15.

17. Werkzeugaufnahme für eine Werkzeuganordnung nach einem der Ansprüche 1 bis 15.
